# EUROPÄISCHE PATENTSCHRIFT

(11) **EP 1 841 557 B1**
(45) Veröffentlichungstag und Bekanntmachung des Hinweises auf die Patenterteilung: **22.07.2009**
(21) Anmeldenummer: 05813026.1
(22) Anmeldetag: 24.11.2005
(51) Int. Cl.: B23F 17/00, B23H 9/00, B23H 3/00

(54) **VERFAHREN ZUR HERSTELLUNG VON ZAHNRÄDERN**
METHOD FOR PRODUCING GEAR WHEELS
PROCEDE DE FABRICATION DE ROUES DENTEES

(30) Priorität: 03.12.2004 DE 102004058445
(43) Veröffentlichungstag der Anmeldung: 10.10.2007
(73) Patentinhaber: MTU Aero Engines GmbH, 80995 München (DE)
(72) Erfinder: BAYER, Erwin, 85221 Dachau (DE); BUSSMANN, Martin, 85247 Schwabhausen (DE); KRÄNZLER, Thomas, 88682 Salem (DE); LAHRES, Michael, 89231 Neu-Ulm (DE); PLATZ, Albin, 86510 Ried-Baindlkirch (DE); STEINWANDEL, Jürgen, 88690 Uhldingen-Mühlhofen (DE)
(86) Internationale Anmeldenummer: PCT/DE2005/002114
(87) Internationale Veröffentlichungsnummer: WO 2006/060982

(56) Entgegenhaltungen:
- DE-A1- 2 926 255
- DE-B- 1 034 790
- GB-A- 1 346 174
- US-A- 4 705 615
- US-A- 4 772 368
- US-A1- 2004 010 914

## Beschreibung

Die Erfindung betrifft ein Verfahren zur Herstellung von Zahnrädern, insbesondere von Getriebezahnrädern, gemäß dem Oberbegriff des Anspruchs 1.

In Kraftfahrzeuggetrieben sowie in Getrieben für Flugtriebwerke werden zunehmend höhere Leistungsdichten bei kleineren Abmessungen sowie geringeren Gesamtgewichten der Getriebe gefordert. Hierdurch wächst die Belastung der in den Getrieben eingesetzten Zahnräder. Um die Zahnräder höheren Belastungen aussetzen zu können, sind neue Konstruktionsprinzipien für die Zahnräder erforderlich. Derartige Hochleistungszahnräder, die hohen Belastungen ausgesetzt werden können, verfügen zum Beispiel über neue Evolventenformen oder über in Umfangsrichtung verlaufende Versteifungsflanken. Derartige Hochleistungszahnräder lassen sich mit den aus dem Stand der Technik bekannten Fertigungsverfahren wie Fräsen, Räumen, Schleifen, Honen sowie Läppen jedoch nicht in der erforderlichen Genauigkeit herstellen. Insbesondere bereitet die Herstellung von Zahnrädern, die in Umfangsrichtung verlaufende Versteifungsflanken aufweisen, mit den aus dem Stand der Technik bekannten Fertigungsverfahren erhebliche Schwierigkeiten.

Das Dokument US 2004/010914A1 beschreibt ein Verfahren zu Herstellung von Verzahnungen und Profilierungen, u.a. durch ECM (EM) und PECM (PEM). Die Herstellung soll an Wellen in montiertem Zustand, z.B. in einem E-Motor, möglich sein.

Das Dokument GB-A-1346174 betrifft ein Verfahren zur Fertigbearbeitung von Zahnrädern, wobei eine ebenfalls als Zahnrad geformte Elektrode mit dem Zahnrad kämmt und in einem Elektrolyt rotiert.

Das Dokument US-A-4772368 schützt ein Verfahren zur funkenerosiven oder elektrochemischen Herstellung spezieller Verzahnungen, wobei das Werkstück in eine Elektrode mit einer Negativform der Verzahnung schraubenartig hinein bewegt wird im Sinne einer Fein- bzw. Endbearbeitung.

Das Dokument US-A-4705615 schützt ein Verfahren zu Herstellung einer Geradverzahnung durch ECM mittels einer Elektrode mit Negativform,

Das Dokument DE 2926255 A1 beschreibt ein Zahnrad mit zwei versetzten, direkt ineinander übergehenden Verzahnungen, welche u.a. elektrochemisch gefertigt sind.

Das Dokument DE 1034790 B betrifft ein Verfahren zur Fertigbearbeitung von Zahnrädern durch Funkenerosion, wobei mehrere Elektroden gleichzeitig auf das Werkstück einwirken können.

Hiervon ausgehend liegt der vorliegenden Erfindung das Problem zu Grunde, ein neuartiges Verfahren zur Herstellung von Zahnrädern, insbesondere von Getriebezahnrädern, mit einer in axialer Richtung gleichmäßigeren Abtragung bei hoher Abtragleistung zu schaffen.

Dieses Problem wird durch ein Verfahren zur Herstellung von Zahnrädern, insbesondere von Getriebezahnrädern, im Sinne des Patentanspruchs 1 gelöst. Dabei umfasst das Verfahren auch die folgenden, an sich bekannten Schritte: a) Bereitstellen eines Grundkörpers für ein Zahnrad, b) elektrochemisches Bearbeiten des Grundkörpers durch einen Precise Electro Chemical Machining-Prozess (PECM-Prozess), wobei zum Herstellen der Zähne des Zahnrads gleichzeitig mehrere zwischen den Zähnen verlaufende Ausnehmungen elektrochemisch abgesenkt werden.

Im Sinne der Erfindung werden gleichzeitig mehrere Arbeitselektroden jeweils durch eine radiale Relativbewegung zwischen dem Grundkörper und der jeweiligen Arbeitselektrode in den Grundkörper hineinbewegt.

Hierdurch wird es möglich, Hochleistungszahnräder mit in Umfangsrichtung verlaufenden Versteifungsflanken und/oder neuen Evolventenformen wirtschaftlich mit der erforderlichen Genauigkeit herzustellen. Hierdurch ist es möglich, die von den Zähnen eines Zahnrads aufnehmbaren Kräfte zu erhöhen und dieses Potential zur Verringerung der Zahnraddimensionen einzusetzen.

Vorzugsweise wird ein Grundkörper für das Zahnrad bereitgestellt, der bereits vorgeformt bzw. vorprofiliert ist.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:
- Fig. 1: eine Prinzipskizze eines ersten mit dem erfindungsgemäßen Verfahrens hergestellten Getriebezahnrads;
- Fig. 2: eine Prinzipskizze eines zweiten mit dem erfindungsgemäßen Verfahrens hergestellten Getriebezahnrads;
- Fig. 3: eine Prinzipskizze eines dritten mit dem erfindungsgemäßen Verfahrens hergestellten Getriebezahnrads; und
- Fig. 4: eine Prinzipskizze einer Elektrodenanordnung zur Verwendung in dem erfindungsgemäßen Verfahren.

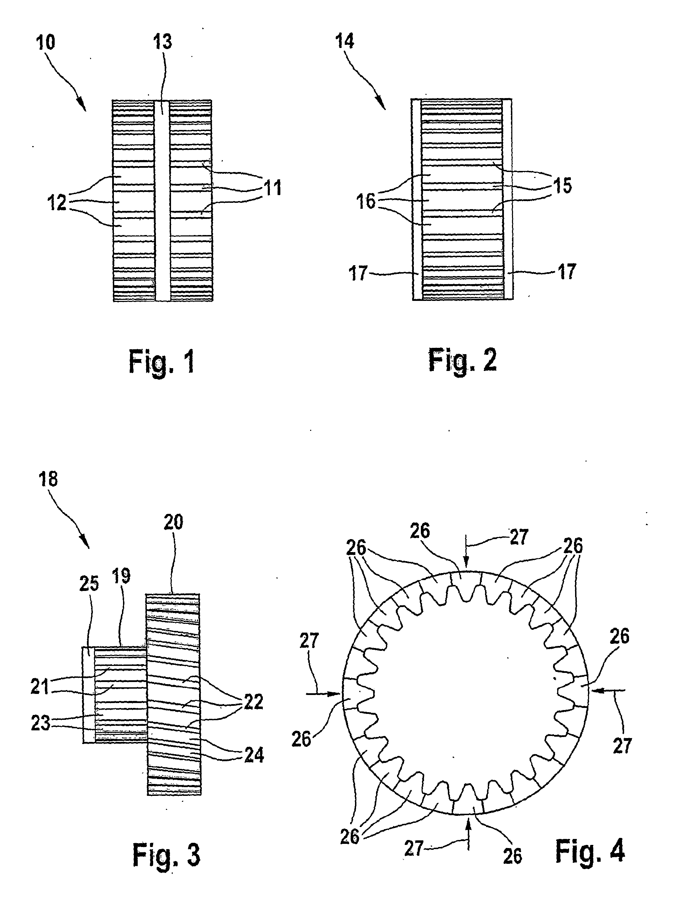

Nachfolgend wird die hier vorliegende Erfindung unter Bezugnahme auf Fig. 1 bis 4 in größerem Detail beschrieben.

Fig. 1 bis 3 zeigen allesamt Hochleistungszahnräder für Getriebe, die mit Hilfe des erfindungsgemäßen Verfahrens hergestellt werden können. So zeigt Fig. 1 ein Zahnrad 10 mit mehreren, in Umfangsrichtung des Zahnrads 10 voneinander beabstandeten Zähnen 11, wobei zwischen zwei benachbarten Zähnen 11 jeweils eine Ausnehmung 12 angeordnet ist. Zur Erhöhung der von den Zähnen 11 aufnehmbaren Kräfte verfügt das Zahnrad 10 über eine umlaufende, in Umfangsrichtung geschlossene Versteifungsflanke 13, die im Ausführungsbeispiel der Fig. 1 in etwa in der axialen Mitte des Zahnrads 10 positioniert ist.

Fig. 2 zeigt ein weiteres Zahnrad 14 mit mehreren in Umfangsrichtung voneinander beabstandeten Zähnen 15, wobei zwischen benachbarten Zähnen 15 wiederum jeweils eine Ausnehmung 16 angeordnet ist. Das Zahnrad 14 der Fig. 2 verfügt an beiden axialen Enden über jeweils eine, in Umfangsrichtung umlaufende, Versteifungsflanke 17. Im Ausführungsbeispiel der Fig. 2 sind die Ausnehmungen 16 zwischen zwei benachbarten Zähnen 15 demnach nur in radialer Richtung offen.

Fig. 3 zeigt ein Zahnrad 18 aus zwei sich räumlich unmittelbar aneinander anschließenden Teilzahnrädern 19 und 20. Jedes der Teilzahnräder 19 und 20 verfügt wiederum über in Umfangsrichtung voneinander beabstandete Zähne 21 bzw. 22, wobei zwischen jeweils zwei benachbarten Zähnen wiederum eine Ausnehmung 23 bzw. 24 angeordnet ist. Die beiden Teilzahnräder 19 und 20 verfügen über unterschiedliche Durchmesser, wobei die beiden Teilzahnräder 19 und 20 unmittelbar aneinander angrenzen. Im Ausführungsbeispiel der Fig. 3 verfügt das Teilzahnrad 19 mit dem geringeren Durchmesser an einem axialen Ende über eine in Umfangsrichtung geschlossene Versteifungsflanke 25, wobei das Teilzahnrad 19 mit dem der Versteifungsflanke 25 gegenüberliegenden Ende an das Teilzahnrad 20 angrenzt. Demnach sind die Ausnehmungen 23 des Teilzahnrads 19 wiederum lediglich in radialer Richtung offen ausgebildet.

Die Zahnräder 10, 14 sowie 18 gemäß Fig. 1 bis 3, können allesamt mit dem erfindungsgemäßen Verfahren hergestellt werden. Hierzu wird ein Grundkörper für das herzustellende Zahnrad 10, 14 bzw. 18 bereitgestellt und in einem Elektrolyt positioniert. Der bereitgestellte Grundkörper ist vorzugsweise vorgeformt bzw. vorprofiliert, weist demnach bereits vorprofilierte Zähne sowie Versteifungsflanken auf. Zur Feinbearbeitung wird der Grundkörper mit einem Precise Electro Chemical Machining (PECM)-Prozess bearbeitet, wobei zum Herstellen der Zähne des Zahnrads gleichzeitig mehrere zwischen den Zähnen verlaufende Ausnehmungen elektrochemisch abgesenkt werden. Hierzu werden mehrere Arbeitselektroden gleichzeitig in radialer Richtung in den Grundkörper für das herzustellende Zahnrad hineinbewegt. Uber den Umfang des herzustellenden Zahnrads werden vorzugsweise alle Ausnehmungen zwischen den Zähnen des Zahnrads gleichzeitig hergestellt.

Bei dem vorgeformten bzw. vorprofilierten Grundkörper für das herzustellende Zahnrad handelt es sich vorzugsweise um einen durch Feingießen oder durch Schmieden oder durch pulvermetallurgisches Spritzgießen hergestellten Grundkörper.

Fig. 4 zeigt schematisiert eine Anordnung aus mehreren Arbeitselektroden 26, wobei jede der Arbeitselektroden 26 dem elektrochemischen Absenken einer zwischen zwei benachbarten Zähnen positionierten Ausnehmung dient. Jede der Arbeitselektroden 26 wird getrennt für sich beim Absenken der Ausnehmungen in radialer Richtung in den Grundkörper des Zahnrads hineinbewegt. Diese Bewegung in radialer Richtung ist für vier der Arbeitselektroden in Fig. 4 durch Pfeile 27 dargestellt. Die in Umfangsrichtung nebeneinander positionierten Zähne bzw. Ausnehmungen werden demnach alle gleichzeitig hergestellt.

Mit dem erfindungsgemäßen Verfahren können Hochleistungszahnräder für Getriebe mit in Umfangsrichtung umlaufenden Versteifungsflanken bzw. Stützflanken sowie neuen Evolventenformen hergestellt werden. Hierdurch können die Zähne der Zahnräder höhere Belastungen aufnehmen, wobei dieses Potential zur Verringerung der Zahnraddimensionen verwendet werden kann. Durch die Verwendung vorprofilierter bzw. vorgeformter Grundkörper, die zum Beispiel durch Feingießen hergestellt werden, lässt sich durch die nachgeschaltete Feinbearbeitung mit Hilfe eines Precise Electro Chemical Machining-Prozesses das gesamte Zahnrad in einem Arbeitsgang innerhalb kurzer Zeit herstellen. Das Absenken der Ausnehmungen zwischen benachbarten Zähnen der Zahnräder erfolgt vorzugsweise synchron, indem für jede Ausnehmung eine Arbeitselektrode in radialer Richtung in den Grundkörper hineinbewegt wird. Weiterhin ist die Herstellung gekoppelter Zahnräder mit unterschiedlichen Durchmessern und unterschiedlichen Verzahnungen möglich, ohne dass die Teilzahnräder zusammengefügt werden müssen. So ist die Herstellung von Zahnrädern mit Teilzahnrädern unterschiedlicher Durchmesser in einem Fertigungsschritt möglich.

Es sei darauf hingewiesen, dass es sich beim Precise Electro Chemical Machining (PECM) um ein elektrochemisches Abtragverfahren handelt, mit welchem eine wesentlich bessere bzw. höhere Präzision erzielt werden kann als bei einem klassischen ECM-Prozess. Beim PECM handelt es sich um ein elektrochemisches Abtragverfahren mit vibrierenden Arbeitselektroden, wobei zwischen die jeweilige Arbeitselektrode und eine Oberfläche des zu bearbeitenden Bauteils eine vorzugsweise pulsierende Gleichspannung angelegt wird. Hierdurch kann an der Oberfläche des zu bearbeitenden Bauteils ein Materialabtrag realisiert werden. Beim PECM werden geringe Spaltmaße zwischen den Arbeitselektroden und der Oberfläche des zu bearbeitenden Bauteils eingehalten, wobei die Spaltmaße gegenüber dem klassischen ECM-Prozess bis auf ca. 10 µm reduziert werden können. Da bei derart geringen Spalten die notwendige Spülung des Spalts mit frischen Elektrolyt nicht mehr realisiert werden kann, werden das Abtragen sowie Spülen hintereinander durchgeführt. Das Abtragen findet bei engstmöglichem Spalt statt, das Spülen bei größtmöglichem Spalt. Dies resultiert letztendlich in einer vibrierenden bzw. oszillierenden Elektrodenbewegung. Spalte zwischen der oder jeder Arbeitselektrode und dem Grundkörper werden so mit Elektrolyt versogt.

## Patentansprüche

1. Verfahren zur Herstellung von Zahnrädern (10, 14, 18), insbesondere von Getriebezahnrädern, mit folgenden Schritten:
a) Bereitstellen eines Grundkörpers für ein Zahnrad (10, 14, 18),
b) elektrochemisches Bearbeiten des Grundkörpers durch ein elektrochemisches Abtragverfahren mit vibrierenden Arbeitselektroden, wobei zwischen die jeweilige Arbeitselektrode und eine Oberfläche des zu bearbeitenden Bauteils eine vorzugsweise pulsierende Gleichspannung angelegt wird (Precise Electro Chemical Machining-Prozess; PECM-Prozess), wobei zum Herstellen der Zähne (11, 15, 21, 22) des Zahnrads (10, 14, 18) gleichzeitig mehrere zwischen den Zähnen (11, 15, 21, 22) verlaufende Ausnehmungen (12, 16, 23, 24) elektrochemisch abgesenkt werden,
**dadurch gekennzeichnet,**
**dass** in Schritt b) gleichzeitig mehrere Arbeitselektroden (26) jeweils durch eine radiale Relativbewegung zwischen dem Grundkörper und der jeweiligen Arbeitselektrode (26) in den Grundkörper hineinbewegt (27) werden, und dass die Anzahl der Arbeitselektroden (26) der Anzahl der zwischen den Zähnen (11, 15, 21, 22) verlaufenden Ausnehmungen (12, 16, 23, 24) entspricht.

2. Verfahren nach Anspruch 1,
**dadurch gekennzeichnet,**
**dass** in Schritt a) ein Grundkörper für das Zahnrad bereitgestellt wird, der vorgeformt bzw. vorprofiliert ist.

3. Verfahren nach Anspruch 2,
**dadurch gekennzeichnet,**
**dass** der vorgeformte bzw. vorprofilierte Grundkörper durch Feingießen oder durch Schmieden oder durch pulvermetallurgisches Spritzgießen hergestellt wird.

4. Verfahren nach einem der Ansprüche 1 bis 3,
**dadurch gekennzeichnet,**
**dass** alle in Umfangsrichtung des Zahnrads (10, 14, 18) nebeneinander positionierten Ausnehmungen (12, 16, 23, 24) gleichzeitig elektrochemisch abgesenkt werden.

5. Verfahren nach einem der Ansprüche 1 bis 4,
**dadurch gekennzeichnet,**
**dass** Spalte zwischen der oder jeder Arbeitselektrode (26) und dem Grundkörper mit Elektrolyt versogt werden.

## Claims

1. Method for producing gearwheels (10, 14, 18), in particular gearwheels for transmissions, with the following steps:
a) preparation of a blank for a gearwheel (10, 14, 18),
b) electrochemical machining of the blank by an electrochemical erosion process with vibrating working electrodes, such that between the respective working electrodes and a surface of the component to be machined a preferably pulsating direct voltage is applied (Precise Electro-Chemical Machining process - PECM, so that to produce the teeth (11, 15, 21, 22) of the gearwheel (10, 14, 18) a plurality of channels (12, 16, 23, 24) running between the teeth (11, 15, 21, 22) are simultaneously hollowed out electrochemically,
**characterised in that**
in step b) a plurality of working electrodes (26) are all simultaneously moved inwards into the blank by a radial relative movement between the respective working electrodes (26) and the blank, and the number of working electrodes (26) corresponds to the number of channels (12, 16, 23, 24) running between the teeth (11, 15, 21, 22).

2. Method according to Claim 1,
**characterised in that**
in step a) a blank for the gearwheel is prepared, which is preformed or pre-profiled.

3. Method according to Claim 2,
**characterised in that**
the preformed or pre-profiled blank is made by precision casting, or forging, or powder-metallurgical injection moulding.

4. Method according to any of Claims 1 to 3,
**characterised in that**
all the channels (12, 16, 23, 24) positioned next to one another in the circumferential direction of the gearwheel (10, 14, 18) are electrochemically hollowed out at the same time.

5. Method according to any of Claims 1 to 4,
**characterised in that**
the gap between the, or each, working electrode (26) and the blank is supplied with electrolyte.

## Revendications

1. Procédé de fabrication de roues dentées (10, 14, 18), en particulier de roues dentées pour engrenages, comportant les étapes suivantes :
a) préparation d'un corps de base pour une roue dentée (10, 14, 18),
b) usinage électrochimique du corps de base par un procédé électrochimique d'enlèvement de matière avec des électrodes de travail vibrantes, une tension continue préférentiellement pulsée étant appliquée entre l'électrode de travail respective et une surface de la pièce à usiner (procédé Precise Electro Chemical Machining ; procédé PECM), plusieurs évidements (12, 16, 23, 24) s'étendant entre les dents (11, 15, 21, 22) étant simultanément chambrés électrochimiquement pour la production des dents (11, 15, 21, 22) de la roue dentée (10, 14, 18),
**caractérisé en ce qu'**à l'étape b), plusieurs électrodes de travail (26) sont simultanément introduites (27) dans le corps de base par un mouvement radial relatif entre le corps de base et chaque électrode de travail (26), et **en ce que** le nombre d'électrodes de travail (26) correspond au nombre d'évidements (12, 16, 23, 24) s'étendant entre les dents (11, 15, 21, 22).

2. Procédé selon la revendication 1, **caractérisé en ce qu'**à l'étape a), le corps de base préparé pour la roue dentée est pré-formé ou pré-profilé.

3. Procédé selon la revendication 2, **caractérisé en ce que** le corps de base pré-formé ou pré-profilé est fabriqué par coulée de précision, par forgeage ou par moulage par injection de poudre métallique.

4. Procédé selon l'une des revendications 1 à 3, **caractérisé en ce que** tous les évidements (12, 16, 23, 24) disposés côte-à-côte sur le pourtour de la roue dentée (10, 14, 18) sont simultanément chambrés électrochimiquement.

5. Procédé selon l'une des revendications 1 à 4, **caractérisé en ce que** l'interstice entre l'électrode de travail ou chaque électrode de travail (26) et le corps de base est alimenté en électrolyte.
